(19) Europäisches Patentamt
European Patent Office
Office européen des brevets

(11) Veröffentlichungsnummer : **0 412 365 B1**

# (12) EUROPÄISCHE PATENTSCHRIFT

(45) Veröffentlichungstag der Patentschrift : **03.11.93 Patentblatt 93/44**

(51) Int. Cl.$^5$ : **A01N 33/18,** A01N 33/00

(21) Anmeldenummer : **90114335.4**

(22) Anmeldetag : **26.07.90**

## (54) Verwendung von Diphenyletherderivaten zur Desikkation und Abszission von Pflanzenorganen.

Die Akte enthält technische Angaben, die nach dem Eingang der Anmeldung eingereicht wurden und die nicht in dieser Patentschrift enthalten sind.

(30) Priorität : **07.08.89 DE 3926055**

(43) Veröffentlichungstag der Anmeldung : **13.02.91 Patentblatt 91/07**

(45) Bekanntmachung des Hinweises auf die Patenterteilung : **03.11.93 Patentblatt 93/44**

(84) Benannte Vertragsstaaten : **BE CH DE ES FR GB GR IT LI NL**

(56) Entgegenhaltungen :
**EP-A- 0 003 416**
**EP-A- 0 040 898**

(56) Entgegenhaltungen :
**EP-A- 0 236 273**
**US-A- 4 419 124**
**US-A- 4 613 360**
**CROP PROTECTION CHEMICALS REFERENCE, 7. Ausgabe, John Wiley & Sons and Chemical and Pharmaceutical Publishing Corp., Seiten 1969 u.2143**

(73) Patentinhaber : **BASF Aktiengesellschaft**
**Carl-Bosch-Strasse 38**
**D-67063 Ludwigshafen (DE)**

(72) Erfinder : **Grossmann, Klaus, Dr.**
**Wilhelm-Busch-Strasse 5**
**D-6703 Limburgerhof (DE)**
Erfinder : **Walter, Helmut, Dr.**
**Gruenstadter Strasse 82**
**D-6719 Obrigheim 3 (DE)**
Erfinder : **Wuerzer, Bruno, Dr.**
**Ruedigerstrasse 13**
**D-6701 Otterstadt (DE)**

EP 0 412 365 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft die Verwendung von Diphenyletherderivaten der allgemeinen Formel I

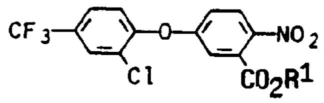

(I),

in der

$R^1$ Wasserstoff, ein Alkalimetall- oder Erdalkalymetallion, gegebenenfalls substituiertes Ammonium, Alkyl mit 1 bis 4 C-Atomen oder Alkoxycarbonylalkyl mit insgesamt 1 bis 6 C-Atomen bedeutet zur Desikkation und Abszission von Pflanzenorganen, insbesondere zur Entlaubung von Baumwolle.

Weiterhin betrifft die Erfindung ein Verfahren zur Desikkation und Abszission von Pflanzenorganen, insbesondere der Blätter, mittels der o.g. Verbindungen I.

Aus EP-A-00 01 427 geht hervor, daß ein speziell substituierter Diphenylether, nämlich der 2,6-Dichlor-3'-fluor-4-trifluormethyl-6'-nitro-di- phenylether, eine Desikkations- und Defolianswirkung bei Baumwollpflanzen aufweist.

Die Anwendung von speziell substituierten Diphenylethern als Herbizide ist in einer Reihe von Publikationen beschrieben. Beispielsweise seien die DE-A-23 11 638 oder die EP-A-00 40 898 genannt, worin die Wirkstoffe 5-[2-Chlor-4-(trifluormethyl)phenoxy]-2-nitrobenzoesäure und dessen Salze (Blazer®, Common name: Acifluorfen) sowie 5-[2-Chlor-4-(trifluormethyl)-phenoxy]-2-nitrobenzoesäure-(ethoxycarbonylmethyl)ester (common name: Fenoroglycoflen) aufgeführt sind.

In EP-A-3416 ist die herbizide Wirkung von 5-[2-Chlor-4-(trifluormethyl)-phenoxy]-N-(methylsulfonyl)-2-nitro-benzamid beschrieben. Die Verbindungen 5-[2-Chlor-4-(trifluormethyl)-phenoxy]-2-nitrobenzoesäure-(ethoxycarbonyl-eth-2-yl)ester und 2-Chlor-1-(3-ethoxy-4-nitrophenoxy)-4-(trifluormethyl)-benzol sind unter dem Common name Lactofen und Oxyfluorfen bekannt.

Außerdem ist aus Crop Protection Chemicals Reference (7. Ausgabe, John Wiley & Sons and Chemical and Pharmaceutical Publishing Corp.) bekannt, daß Oxyfluorfen bei Baumwolle eine vorrübergehende Desikkation verursachen kann, und daß Lactofen die Blätter von Baumwollpflanzen schädigt.

Mischungen von Diphenyletherderivaten I mit Chinolinderivaten sind aus der EP-A-208 245 (DE-A-35 24 319) zur Regulierung des Pflanzenwachstums bekannt.

Sowohl an Abszissions- als auch Desikkationsmitteln besteht ein starkes wirtschaftliches Interesse aus Gründen der Ernteerleichterung. Insbesondere im intensiven Baumwollanbau ist die Anwendung von Entblätterungsmitteln Grundvoraussetzung für einen effektiven Einsatz von Pflückmaschinen für die Kapselernte. Die bisher verwendeten Handelsprodukte werden wesentlichen Anforderungen der Praxis, wie z.B. schnelle und anhaltende Wirksamkeit auch bei kühlen Teperaturverhältnissen, geringe Aufwandmengen, geringe Umweltbelastung (Toxizität, Geruch Brennbarkeit), nicht gerecht.

Aufgabe der Erfindung war es demnach, Wirkstoffe zu finden, die vorteilhaft zur Abszission, inbesondere gezielten Induktion des Abwurfes von Blättern, Blüten oder Früchten bei Kulturpflanzen, wie z.B. Baumwolle, Citrus, Oliven und Kern- und Steinobst sowie als Desikkantien zur Austrocknung der oberirdischen Teile in Kulturpflanzen, wie z.B. Kartoffel, Raps, Sonnenblume und Sojabohne verwendet werden können.

Demgemäß wurde gefunden, daß die eingangs definierten Diphenylether eine ausgeprägte Wirksamkeit hinsichtlich der Abzission und Desikkation von Pflanzenorganen besitzen. Ihre Verwendung bietet gegenüber bekannten Mitteln erhebliche Vorteile:

a) wirken sie bei vergleichbarer Aufwandmenge wesentlich vollständiger,

b) ist ihre Wirkung auch bei niedrigen Temperaturen wesentlich sicherer.

Neben ihrer hervorragenden Wirkung als Defoliantien, insbesondere zur Entlaubung von Baumwolle, zeigen die Verbindungen I eine sehr gute Wirksamkeit bei ihrer Anwendung als Desikkantien zur Austrocknung der oberirdischen Pflanzenteile bei Kulturpflanzen wie z.B. Kartoffel, Sonnenblume, Sojabohne und Raps, um den Erntevorgang zu erleichtern. Auperden führen sie zu einer gleichmäßigen Abreife der Erntefrüchte.

Der Rest $R^1$ in den Verbindungen I steht insbesondere für Wasserstoff oder Natrium oder für eine Ethoxycarbonylmethyl- oder eine Ethoxycarbonyleth-2-yl-gruppe. Anstelle der Säure im Fall von $R^1$ = H können auch die entsprechenden Alkalimetall-, Ammonium- oder Erdalkalimetallsalze verwendet werden. Alkalimetallsalze sind z.B. Lithium, Natrium und Kaliumsalze, Erdalkalimetallsalze sind z.B. Magnesium- oder Calciumsalze. Im Fall der Ammoniumsalze steht $R^1$ z.B. für das nicht substituierte Ammoniumion wie auch für Ammoniumionen in denen 1, 2 oder alle 3 Wasserstoffatome durch Substituenten wie verzweigte oder unverzweigte Alkylreste mit jeweils 1 bis 4 C-Atomen, die ggf. substituiert sind durch Halogen (Cl, Br), Hydroxy oder $C_1$-

$C_4$-Alkoxi, ersetzt sind oder in denen zwei der Alkylreste miteinander verbunden sind zu einem Fünf- oder Sechsring der gegebenenfalls ein weiteres Heteroatom wie Sauerstoff oder Stickstoff enthält.

Weiterhin hat $R^1$ die Bedeutung einer $C_1$-$C_4$-Alkylgruppe wie Methyl, Ethyl, Propyl, Isopropyl oder Butyl oder einer $C_1$-$C_6$-Alkoxycarbonylalkylgruppe, z.B. einer $C_1$-$C_3$-Alkoxycarbonyl-$C_1$-$C_2$-alkylgruppe wie Methoxycarbonylmethyl, Methoxycarbonylethyl, Ethoxycarbopxylethyl, Propoxycarbonylmethyl und insbesondere Ethoxycarbonylmethyl sowie Ethoxycarbonyleth-2-yl.

Beispielsweise seien folgende Diphenyletherderivate aufgeführt:

| Nr. | Struktur | Common name |
|---|---|---|
| 1 | 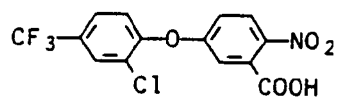 | Acifluorfen |
| 2 | 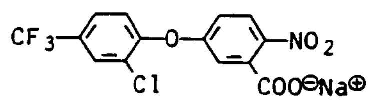 | Acifluorfen-Natrium |
| 3 | 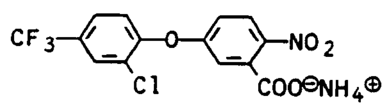 | |
| 4 | 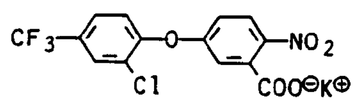 | |
| 5 | 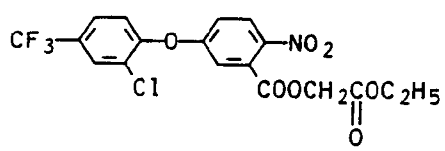 | Fluoroglycofen |
| 6 | 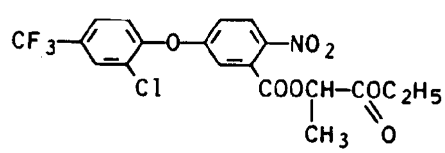 | Lactofen |

Die Diphenylether I sind handelsübliche Verbindungen oder können wie im eingangs zitierten Stand der Technik beschrieben hergestellt werden.

Die Diphenyletherderivate I können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten

oder Öldispersionen können die Substanzen als solche in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Napthalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Umhüllungs-, Imprägnierungs- und Homogengranulate, können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten zwischen 0,1 und 95 Gew.% vorzugsweise zwischen 0,5 und 90 Gew.%, Wirkstoff. Beispielsweise enthält ein Mittel etwa 10 bis 80 Gew.-% Wirkstoff, etwa 30 bis 90 Gew.-% flüssige oder feste Trägerstoffe sowie ggf. bis zu 20 Gew.-% oberflächenaktive Stoffe. Es kann bei Bedarf auf eine geeignete Anwendungskonzentration verdünnt werden.

Beispiele für Formulierungen sind:

I. Man vermischt 90 Gew.-Teile der Verbindung Nr. 1 mit 10 Gew.-Teilen N-methyl-α-pyrrolidon und erhält eine Lösung, die zur Anwendung in Form kleinster Tropfen geeignet ist.

II. 20 Gew.-Teile der Verbindung Nr. 2 werden in einer Mischung gelöst, die aus 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure und 5 Gew.-Teilen des Anlagerungsproduktes und 40 Mol Ethylenoxid an 1 Mol Ricinusöl besteht. Durch Ausgießen und feines Verteilen der Lösung in 100 000 Gew.-Teilen Wasser erhält man eine wäßrige Dispersion, die 0,02 Gew.% des Wirkstoffs enthält.

III.20 Gew.-Teile der Verbindung Nr. 3 werden in einer Mischung gelöst, die aus 40 Gew.-Teilen Cyclohexanon, 30 Gew.-Teilen Isobutanol, 20 Gew.-Teilen des Anlagerungsproduktes von 7 Mol Ethylenoxid an 1 Mol Isooctylphenol und 10 Gew.-Teilen des Anlagerungsproduktes von 40 Mol Ethylenoxid und 1 Mol Ricinusöl besteht. Durch Eingießen und feines Verteilen der Lösung in 100 000 Gew.-Teilen Wasser erhält man eine wäßrige Dispersion, die 0,02 Gew.% des Wirkstoffs enthält.

IV. 20 Gew.-Teile der Verbindung Nr. 5 werden in einer Mischung gelöst, die aus 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl besteht. Durch Eingießen und feines Verteilen der Lösung in 100 000 Gew.-Teilen Wasser erhält man eine wäßrige Dispersion, die 0,02 Gew.% des Wirkstoffs enthält.

V. 20 Gew.-Teile der Verbindung Nr. 4 werden mit 3 Gew.-Teilen des Natriumsalzes der Diisobutylnaphthalin-α-sulfonsäure, 17 Gew.-Teilen des Natriumsalzes einer Ligninsulfonsäure aus einer Sulfitablauge und 60 Gew.-Teilen pulverförmigem Kieselsäuregel gut vermischt und in einer Hammermühle vermahlen. Durch feines Verteilen der Mischung in 20 000 Gew.-Teilen Wasser erhält man eine Spritzbrühe, die 0,1 Gew.% des Wirkstoffs enthält.

VI. 3 Gew.-Teile der Verbindung Nr. 1 werden mit 97 Gew.-Teilen feinteiligem Kaolin vermischt. Man erhält auf diese Weise ein Stäubemittel, das 3 Gew.% des Wirkstoffs enthält.

VII.30 Gew.-Teile der Verbindung Nr. 5 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 20 Gew.-Teile der Verbindung Nr. 5 werden mit 2 Teilen Calciumsalz der Dodecylbenzolsulfonsäure, 8 Teilen Fettalkohol-polyglykolether, 2 Teilen Natriumsalz eines Phenolsulfonsäure-harnstoff-formaldehyd-Kondensates und 68 Teilen paraffinischen Mineralöls innig vermischt. Man erhält eine stabile ölige Dispersion.

IX. 10 Gew.-Teile der Verbindung Nr. 1 werden mit 4 Gew.-Teilen des Natriumsalzes der Diisobutylnaphthalin-2-sulfonsäure, 20 Gew.-Teilen des Natriumsalzes einer Ligninsulfonsäure aus einer Sulfitablauge, 38 Gew.-Teilen Kieselsäuregel und 38 Gew.-Teilen Kaolin gut vermischt und in einer Hammermühle vermahlen. Durch feines Verteilen der Mischung in 10 000 Gew.-Teilen Wasser erhält man eine Spritzbrühe, die 0,1 Gew.% des Wirkstoffs enthält.

Eine Förderung der Wirkung und der Wirkungsgeschwindigkeit kann z.B. durch wirkungssteigernde Zusätze wie organische Lösungsmittel, Netzmittel und Öle erzielt werden. Das läßt eine Minderung der Aufwandmenge des eigentlichen Wirkstoffes zu.

Die Mittel werden den Pflanzen vornehmlich durch Blattspritzung zugeführt. Dabei kann die Ausbringung z.B. mit Wasser als Trägerstoff durch übliche Spritztechniken mit Spritzbrühenmengen von etwa 100 bis 1000 l/ha erfolgen. Eine Anwendung der Mittel im sogenannten "Low Volume"- und "Ultralow-Volume"-Verfahren ist ebenso möglich wie ihre Applikation in Form von sogenannten Mikrogranulaten.

Die Diphenylether I können in Aufwandmengen von 0,001 bis 10 kg/ha, vorzugsweise 0,01 bis 3 kg/ha, insbesondere 1 bis 1000 g/ha, eingesetzt werden.

Die Mittel können entweder für sich allein, in Mischung mit anderen Mitteln oder mit anderen Wirkstoffen angewendet werden. Gegebenenfalls können andere Entblätterungs-, Desikkations-, Pflanzenschutz- oder Schädlingsbekämpfungsmittel je nach dem gewünschten Zweck zugesetzt werden.

Auch hat sich gezeigt, daß Mischungen der Diphenylether I z.B. mit den nachfolgend aufgeführten Wirkstoffen (A.)-(C.) zu einer noch besseren Bekämpfung des unerwünschten Wiederaustriebs von Pflanzen nach der Desikkation bzw. Entblätterung bei Baumwolle führen. Der Entblätterungserfolg bleibt dabei aufrechterhalten oder wird sogar verstärkt:

(A) Herbizidaktive Wirkstoffe aus der Gruppe der

a. Chloracetanilide, wie das in DE-OS 26 48 008 beschriebene 2-Chlor-N-(2,6-dimethylphenyl)-N-(1H-pyrazol-1-ylmethyl)-acetamid (common name: Metazachlor),

b. Substituierte Chinolin-8-carbonsäuren, wie die in EP-A-104 389 beschriebene 3,7-Dichlor-chinolin-8-carbonsäure und die in EP-A-60 429 beschriebene 3-Methyl-7-chlor-chinolin-8-carbonsäure,

c. Cyclohexenonderivate, wie das in DE-OS 28 22 304 beschriebene 2[(1-Ethoxyimino)butyl]-5-[2-(ethyl-thio)-propyl]-3-hydroxy-2-cyclohexen-1-on (common name: Sethoxydim) und das in DE-OS 31 21 355 beschriebene 2-[1-(Ethoxyimino)butyl]-3-hydroxy-5-(2H-tetrahydrothiopyran-3-yl)-2-cyclohexen-1-on (common name: Cycloxydim),

d. Phenoxyalkancarbonsäuren, wie (4-Chlor-2-methyl-phenoxy)essigsäure,

e. 3-(Isopropyl)-1H-2,1,3-benzothiadiazin-4(3H)-on 2,2-dioxid, beschrieben in DE-OS 15 42 836 (Bentazon®),

f. Dinitroaniline wie das in der DE-OS 22 41 408 beschriebene N-(1-Ethylpropyl)-3,4-dimethyl-2,6-dinitro-anilin,

g. Imidazolinone, z.B. die 2-[4,5-Dihydro-4-methyl-4-(1-methylethyl)-5-oxo-1H-imidazol-2-yl]-3-chinolincarbonsäure (Scepter®),

h. 3,4,5,6-Tetrahydrophthalimide wie das in der EP-A 0 240 659 beschriebene N-[5-(α-Chloracrylsäureethylester)-4-chlor-phenyl]-3,4,5, 6-tetrahydrophthalimid.

i. Sulfonylharnstoffderivate wie die unter den Handelsnamen Glean®, Ally®, Express®, Logran®, Setoff®, Muster®, Londax®, Oust®, Classic®, Bacon®, Harmony® oder Remedy® z.B. aus DE-A-27 15 786, den EP-A-7687, 202 830, 44 808, 44 807, 136 061, 51 566, 7687, 84 020, 30 142, 237 292, 232 067, dem US-Patent 4 547 215 oder Chemical Abstracts 102, 220, 905 bekannten Verbindungen.

Bevorzugte Mischungspartner sind:

2-Methyl-6-ethyl-ethoxymethyl-2-chloracetanilid
2-Methyl-6-ethyl-N-(methoxy-1-methylethyl)-2-chloracetanilid
2,6-Dimethyl-N-(1-H-pyrazolyl-1-yl-methyl)-2-chloracetanilid
2,6-Diethyl-N-(methoxymethyl)-2-chloracetanilid
3-Methyl-7-chlor-chinolin-8-carbonsäure (Salze, Ester)
3,7-Dichlor-chinolin-8-carbonsäure (Salze, Ester)
2-[(1-Ethoxyimino)butyl]-5-[2-(ethylthio)-propyl]-3-hydroxy-2-cyclohexan-1-on (Salze)
2-[(1-trans-chlorallyloxyimino)butyl]-5-[-2-(ethylthio)-propyl]-3-hydroxy-2-cyclohexan-1-on (Salze)
2-[(1-trans-chlorallyloximino)propyl]-5-[-2-(ethylthio)-propyl]-3-hydroxy-2-cyclohexan-1-on (Salze)
2-[(1-Ethoximino)butyl]-5-[-2-H-tetrahydrothiopyran-3-yl)-3-hydroxy-2-cyclohexan-1-on (Salze)
2-[(1-Ethoximino)propyl]-5-(2,4,6-trimethylphenyl)-3-hydroxy-2-cyclohexan-1-on (Salze)
2-Methyl-4-chlorphenoxyessigsäure (Salze, Ester, Amide)
2-[2-Methyl-4-chlor-phenoxy]propionsäure (Salze, Ester, Amide)
4-[2-Methyl-4-chlor-phenoxy]-buttersäure (Salze, Ester, Amide)
4-[-2,4-Dichlorphenoxy]-buttersäure (Salze, Ester, Amide)

2-[-2,4-Dichlorphenoxy]-propionsäure (Salze, Ester, Amide)
2,2-Dichlorphenoxyessigsäure (Salze, Ester, Amide)
3,5,6-Trichlorpyridyl-2-oxyessigsäure (Salze, Ester, Amide)
3-(1-Methylethyl)-1-H-2,1,3-benzothiadiazin-4-(3H)-on-2,2-dioxid (Salze)
3-(1-Methylethyl)-1-cyan-2,1,3-benzothiadiazin-4-(3H)-on-2,2-dioxid (Salze)
N-(1-Ethoxypropyl)-3,4-dimethyl-2,6-dinitro-anilin
2-[4,5-Dihydro-4-methyl-4-(1-methylethyl)-5-oxo-1H-imidazol-2-yl]-3-chinolincarbonsäure
N-[5-(α-Chloracrylsäureethylester)-4-chlorphenyl]-3,4,5,6-tetrahydrophthalimid

(B) Defoliantien und Desikkantien, wie z.B. genannt in Cathey, G. W. (1986) Physiology of defoliation in cotton production, in "Cotton Physiology" (J.R. Mauney, J. McD. Stewart, eds.) The cotton Foundation reference book series, No. 1, chapter 14, 143-153 und in Morgan, P. W. (1985) Chemical manipulation of abscission and desiccation. In "Agricultural chemicals of the Future" (J. L. Hilton, ed.) BARC Symposium 8, 61-74. Rowman & Allanheld, Totowa.

a. 6,7-Dihydrodipyridol (1,2-α:2′,1′-c)pyridilium-Ion als Dibromid-Monohydrat Salz (Common name: Diquat) und 1,1′-Dimethyl-4,4′-bipyridinium-Ion als Dichlorid oder Dimethylsulfatsalz (Common name: Paraquat),
b. (2-Chlorethyl)phosphonsäure (Ethrel®),
c. S,S,S-Tributylphosphortrithioat und S,S,S-Tributylphosphortrithioit,
d. 2,3-Dihydro-5,6-dimethyl-1,4-dithiin-1,1,4,4-tetraoxid (Harvade®),
e. Salze des N-(Phosphonomethyl)glycins, wie das Isopropylammoniumsalz (Roundup®),
f. Magnesium- und Natriumchlorat,
g. 1,2-Dihydropyridazin-3,6-dion,
h. 7-Oxabicyclo[2,2,1]heptan-2,3-dicarbonsäure (Common name: Endothall),

Bevorzugte Mischungspartner sind:

2-Chlorethylphosphonsäure
S,S,S-Tributylphosphortrithioat und -trithioit
2,3-Dihydro-5,6-dimethyl-1,4-dithiin-1,1,4,4-tetraoxid
N-(Phosphonomethyl)glycine (Salze)
1,2-Dihydropyridazin-3,6-dion
Perchlorate
7-Oxabicyclo[2,2,1]heptan-2,3-dicarbonsäure (Salze, Ester, Amide)
1,1-Ethylen-2,2-bipyridylium-dibromid

(C) Wachstumsretardantien aus der Gruppe

a. Quartäre Ammoniumsalze aus der Gruppe der N,N-Dimethyl-azacycloheptaniumsalze, N,N-Dimethylpiperidiniumsalze, N,N-Dimethylhexahydropyridaziniumsalze, N,N-Dimethyl-tetrahydropyridaziniumsalze, N-Methyl-pyridiniumsalze, N,N-Dimethyl-pyrrolidiniumsalze und N,N,N-Trimethyl-N-2-chlorethylammoniumsalze, insbesondere das N-2-Chlorethyl-N-trimethylammoniumchlorid (Common name: Chlormequatchlorid) und das N,N-Dimethylpiperdiniumchlorid (Common name: Mepiquatchlorid),
b. Pyrimidinverbindungen wie aus US 3 818 009 und aus Journal of Plant Growth Regulation 7:27, 1988, bekannt (z.B. die mit dem Common name: Ancymidol oder Flurprimidol),
c. Pyridinverbindungen die aus DE-A-30 15 025 bekannt sind,
d. Norbornadiazetine, wie sie in den DE-OS 26 15 878 und 27 42 034 beschrieben sind,
e. Wachstumsregulatorisch wirksame Triazolverbindungen wie sie in der europäischen Anmeldung 88104320.2, in British Crop Protection Conference - Weeds 1982, Vol. 1, BCPC Publications, Croydon, 1982, Seite 3, in Plant Cell Physiol. 25, 611, in Pestic. Sci. 19, 153, in J. Agron. Crop. Sci. 158, 324 oder in J. Plant Growth Regul. 4, 181, beschrieben sind, z.B. 1-Phenoxy-3-(1H-1,2,4-triazol-1-yl)-4-hydroxy-5,5-dimethylhexan,
f. 2-Acyl-3-hydroxycyclohex-2-en-1-one wie in EP-A-126 713 oder 123 001 beschrieben,
g. 1-(4-Chlorphenoxy)-3,3-dimethyl-1-[1,2,4-triazol-1-yl]-butan-2-on (Common name: Triadimefon)
N-[2,4-Dimethyl-5-[trifluormethyl-sulfonylamino]]phenyl-acetamid (Common name: Mefluidide)
2-Chlor-2′,6′-diethyl-N-[methoxymethyl]-acetanilid (Common name: Alachlor)
S-Ethyl-dipropylthiocarbamat (Common name: EPTC)
Bernsteinsäure-2,2-dimethylhydrazid (Common name: Daminozid)

Bevorzugte Mischungspartner sind:

N,N,N-Trimethyl-N-2-chlorethylammoniumsalze
N,N-Dimethylpiperidiniumsalze
N-Methylpyridiniumsalze
α-Cyclopropyl-α-(4-methoxyphenyl)-5-pyrimidin-methanol

α-Cyclopropyl-α-(4-trifluormethoxyphenyl)-5-pyrimidin-methanol
5(4-Chlorphenyl)3,4,5,9,
10-pentaaza-tetracyclo[5,4,1,$0^{2}$,$^{6}$,$0^{8}$,$^{11}$]-dodeca-3,9-dione
all-cis-8-(4-Chlorphenyl)-3,4,8-triazatetracyclo[4,3,1,0,$0^{2}$,$^{5}$,$0^{7}$,$^{9}$]-dec-3-on
Bernsteinsäure-mono-N,N-dimethylhydrazid
N,N-Dipropylthiolcarbaminsäure-ethylester
N-2,4-Dimethyl-5-(trifluormethyl)-sulfonylamino-phenyl-acetamid
1-(4-Chlorphenoxy-)3,3-dimethyl-1-(1,2,4-triazol-1-yl)-2-butanon
2-Propylcarbonyl-5-ethoxycarbonyl-3-hydroxy-2-cyclohexen-1-on
1-(1,2,4-Triazol-1-yl)-1-methoxy-2-(2,4-dichlorphenyl)-propanol-2
2,2-Dimethyl-4-(1,2,4-triazol-1-yl)-6-phenoxy-hexanol-3
2,2-Dimethyl-4-(1,2,4-triazol-1-yl)-5-(4-chlorphenyl)-pentanol-3
2,2-Dimethyl-4-(1,2,4-triazol-1-yl)-5-(4-chlorphenyl)-penten-4-ol-1
2,2-Dimethyl-4-(1,2,4-triazol-1-yl)-5-cyclohexyl-penten-4-ol-3
1(5-Methyl-1,3-dioxan-yl-5)-4-(1,2,4-triazol-1-yl)-4-(4-trifluormethylphenyl)-propen-2-ol.

Anwendungsbeispiele

Als Vergleichsmittel A dient N-Phenyl-N'-(1,2,3-thiadiazol-5-yl)-harnstoff (Dropp®, Common name: Thidiazuron)

Die Wirkstoffe wurden in Form ihrer fertig formulierten Handelsprodukte verwendet. Die Angaben zur mengenbezogenen Wirkung beziehen sich auf den Wirkstoffanteil.

Die Wassermenge der Formulierungen betrug umgerechnet 1000 l/ha.

Als Testpflanzen dienten junge, 5- bis 6-blättrige (ohne Keimblätter) Baumwollpflanzen der Sorte Stoneville 825, die unter Gewächshausbedingungen angezogen wurden (rel. Luftfeuchtigkeit 50 bis 70 %).

Anwendungsbeispiele 1 und 2

Die Baumwollpflanzen wurden tropfnaß mit wäßrigen Aufbereitungen (unter Zusatz von 0,15 Gew.% des Fettalkoholalkoxylats Plurafac® LF 700, bezogen auf die Spritzbrühe) der angegebenen Wirkstoffe blattbehandelt. 7 Tage nach Wirkstoffapplikation wurde die Anzahl abgeworfener Blätter und der Grad der Entblätterung in % bestimmt. Bei den unbehandelten Kontrollpflanzen trat kein Blattfall auf.

| Mittel, enthaltend Wirkstoff-Nr. | umgerechnete Aufwandmenge [kg/ha] | Entblätterung [%] | Tag-/Nacht-temperatur [°C] |
|---|---|---|---|
| 2 (Blazer®) | 0,062 | 20 | 20/13 |
| | 0,125 | 78 | |
| | 0,250 | 88 | |
| Vergleichsmittel A | 0,125 | 0 | 20/13 |
| | 0,5 | 6 | |
| 5 (Fluoroglycofen) | 0,03 | 62 | 21/15 |
| | 0,062 | 83 | |
| Vergleichsmittel A | 0,03 | 6 | 21/15 |
| | 0,062 | 10 | |

Die Ergebnisse der Anwendungsbeispiele 1 und 2 zeigen, daß die erfindungsgemäß verwendeten Verbindungen bereits bei geringer Aufwandmenge zur Entblätterung der Pflanzen führen und ihre gute Wirkung auch bei tiefer Temperatur enthalten. Sie sind dem Vergleichsmittel A deutlich überlegen.

**Patentansprüche**

1. Verwendung von Diphenyletherderivaten der allgemeinen Formel I

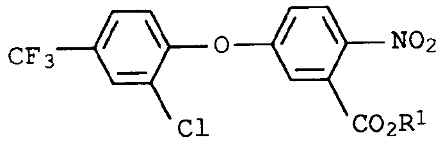

(I),

in der $R^1$ Wasserstoff, ein Alkalimetall- oder Erdalkalimetallion, gegebenenfalls substituiertes Ammonium, Alkyl mit 1 bis 4 C-Atomen oder Alkoxycarbonylalkyl mit insgesamt 1 bis 6 C-Atomen bedeutet, zur Desikkation und Abszission von Pflanzenorganen.

2. Verwendung von Diphenyletherderivaten I gemäp Anspruch 1 zur Entlaubung von Baumwolle.

3. Verfahren zur Desikkation und Abszission von Pflanzenorganen, dadurch gekennzeichnet, daß man ein Diphenyletherderivat I gemäp Anspruch 1 auf Pflanzen oder deren Lebensraum einwirken läßt.

4. Verfahren nach Anspruch 3, dadurch gekennzeichnet, daß man 0,001 bis 10 kg/ha eines Diphenyletherderivats I auf Pflanzen oder deren Lebensraum einwirken läßt.

**Claims**

1. The use of diphenyl ether derivatives of the general formula I

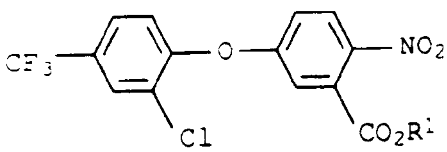

(I)

where $R^1$ is hydrogen, an alkali metal or alkaline earth metal ion, unsubstituted or substituted ammonium, alkyl having 1 to 4 C atoms or alkoxycarbonylalkyl having a total of 1 to 6 C atoms, for the desiccation and abscission of plant organs.

2. The use of diphenyl ether derivatives I as claimed in Claim 1 for defoliating cotton.

3. A process for the desiccation and abscission of plant organs, which comprises allowing a diphenyl ether derivative I as claimed in Claim 1 to act on plants or their environment.

4. A process as claimed in Claim 3, wherein from 0.001 to 10 kg/ha of a diphenyl ether derivative I is allowed to act on plants or their environment.

**Revendications**

1. Utilisation de dérivés d'éther diphénylique de formule générale I

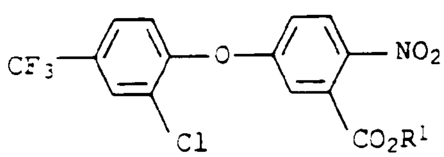

(I),

dans laquelle $R^1$ représente hydrogène, un ion métal alcalin ou alcalino-terreux, ammonium éventuellement substitué, alkyle à 1 à 4 atomes C ou alcoxycarbonylalkyle ayant au total 1 à 6 atomes C, pour la dessication et l'abscission d'organes végétaux.

2. Utilisation de dérivés d'éther diphénylique, I, selon la revendication 1, pour la défoliation du coton.

3. Procédé de dessication et d'abscission d'organes végétaux, caractérisé par le fait que l'on fait agir un dérivé d'éther diphénylique I, selon la revendication 1, sur les plantes ou leur biotope.

4. Procédé selon la revendication 3, caractérisé par le fait que l'on fait agir 0,001 à 10 kg/ha d'un dérivé d'éther diphénylique I sur les plantes ou leur biotope.